# EUROPEAN PATENT APPLICATION

(11) **EP 1 336 913 A2**
(43) Date of publication of application: **20.08.2003**
(21) Application number: 02255850.6
(22) Date of filing: 21.08.2002
(51) Int. Cl.: G06F 1/00

(54) **Original creating apparatus and originality guaranteeing apparatus**

(30) Priority: 18.02.2002 JP 2002040729
(71) Applicant: FUJITSU LIMITED, Kawasaki-shi, Kanagawa 211-8588 (JP)
(72) Inventor: Nishimoto, Katsushi, c/o Fujitsu Limited, Kawasaki-shi, kanagawa 211-8588 (JP); Akiyama, Ryota, c/o Fujitsu Limited, Kawasaki-shi, kanagawa 211-8588 (JP); Hasebe, Takayuki, c/o Fujitsu Limited, Kawasaki-shi, kanagawa 211-8588 (JP)
(74) Representative: Mohun, Stephen John

(57) **Abstract**

An original creating apparatus and an originality guaranteeing apparatus prevent a document and a signature from being falsified while visually displaying the signature, etc are provided. For example, time data (t1) is added to data of a document (development plan document) and data of a seal column of a creator, an electronic signature is put, and a checksum (CS1) is generated. Then, an original file including also the checksum (CS1) is created, and transmitted to an approver side. The approver side verifies the checksum (CS1), makes a comparison between the checksum (CS1) obtained as a result of the verification, and the checksum recorded to the file, and whether or not both of the checksums match is determined, so that the originality is confirmed. With such a configuration, the presence/absence of falsification can be verified, whereby a document transfer can be visually made while guaranteeing the originality of document data.

## Description

The present invention relates to an originality guaranteeing apparatus preventing a document which includes a signature from being falsified, and guaranteeing the originality.

Currently, a lot of documents are created, and transmitted/received via a network such as a LAN, the Internet, etc. For example, a document which must be approved by a manager, etc. among such documents, is affixed with the seal of a document creator, physically transmitted, or transmitted via a network.

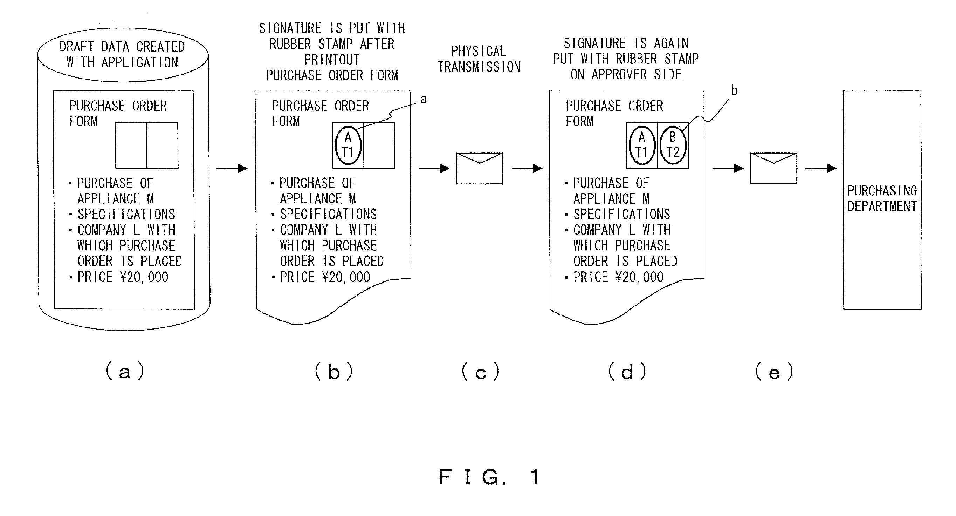

Fig. 1 shows a system transmitting a document to be approved, and exemplifies a transfer of a purchase order form. As shown in this figure, a document creator firstly creates a document with an application. Since the example shown in this figure is an example of a purchase order form of an appliance, the creator (the person who places a purchase order) creates a purchase order form which describes the name, the specifications, and the price, etc. of the appliance desired to be purchased ( (a) of Fig. 1). Next, the creator (the person who places the purchase order) prints out the purchase order form, affixes his or her seal (creator seal A) to a seal affixing column a ( (b) of Fig. 1), and transmits the purchase order form to an approver (a person who makes an approval) ( (c) of Fig. 1). T1 shown in the seal column a indicates a date and time.

The approver verifies the transmitted purchase order form, and affixes a seal (B) to an approval column b if there are no errors ((d) of Fig. 1), and transmits the purchase order form, for example, to a purchasing department ((e) of Fig. 1). Also in this case, T2 shown in the approval column b indicates a date and time.

If a network is used to transfer the document, the creator (the person who places the purchase order) inputs a code on a computer instead of a creator seal, and puts his or her signature. The approver checks this signature and the contents of the document, further puts his or her signature, and transfers the document to the purchasing department.

However, the above described conventional techniques have problems. For example, when a document to be approved is physically transmitted, it takes time to transmit the document. Accordingly, even if a document is created electronically, time is required to transmit the document, leading to inefficiency.

Or, if not only the creation of a document but also the transmission of the document is made with an electronic means, falsification of the document or a signature included in the document becomes a risk. Additionally, an approval process is desired to be performed by visually verifying a document, as is often the case.

Embodiments of the present invention aim to provide an original creating apparatus and an originality guaranteeing apparatus, which prevent a document or signature from being falsified, and guarantee the originality while visually displaying the signature, etc. According to an aspect of the present invention, there is provided an originality guaranteeing apparatus which comprises: a receiving unit for receiving a file obtained by adding date and time data, and a checksum to a result of combining document data and signature data; a verifying unit for verifying the file, and extracting the checksum from the file; a comparing unit for making a comparison between the checksum extracted by the verifying unit and the checksum added to the file; a signature unit for performing a signature process for the file if a match is found as a result of the comparison, and generating a new checksum; and a file creating unit for creating a new file by combining the data of the file with the new checksum.

According to embodiments of the present invention, a checksum which is added to a file and encrypted is verified by a verifying unit, and a comparison is made between an obtained checksum and the checksum which is actually recorded to the file, so that whether or not the checksums match is determined, and falsification of an original can be prevented. According to embodiments of the present invention, an original includes both document data and signature data, and it is guaranteed that no falsification exists in both the document data and the signature data.

If the above described checksums mismatch, this can be displayed on a display unit, etc., or notified to a user with an audible alarm, etc. As a result, falsification can be securely prevented.

Additionally, creation of an original can be made by generating document data with an application program, and by combining the document data with signature data. Then, date and time data can be added to the result of the combination, a checksum is generated, and a file is created by adding the date and time data and the checksum to the combined data. The created file can then be transmitted to the originality guaranteeing apparatus.

Furthermore, data of the above described file may be recorded on a magneto-optical disk so as to guarantee the originality. In this case, information recorded in the file and on the magneto-optical disk include also the information of a number unique to the magneto-optical disk.

The invention is defined in the attached independent claims, to which reference should now be made. Further, preferred features may be found in the subclaims appended thereto.

Preferred embodiments of the invention will now be described by way of example with reference to the accompanying drawings, in which:
Fig. 1 explains a system transmitting a document to be approved;
Fig. 2 explains a fundamental system according to embodiments of the present invention;
Fig. 3 shows the configuration of a system according to a first preferred embodiment;
Fig. 4 is a flowchart explaining a process according to the first preferred embodiment;
Fig. 5 explains a signature process;
Fig. 6 is a flowchart explaining the process according to the first preferred embodiment;
Fig. 7 explains a verification process;
Fig. 8 shows the configuration of a system according to a second preferred embodiment;
Fig. 9 is a flowchart explaining a process according to the second preferred embodiment;
Fig. 10 shows the configuration of a system according to a third preferred embodiment;
Fig. 11 is a flowchart explaining a process according to the third preferred embodiment; and
Fig. 12 is a flowchart explaining the process according to the third preferred embodiment.

Hereinafter, preferred embodiments according to the present invention are described in detail with reference to the drawings.

### <first preferred embodiment>

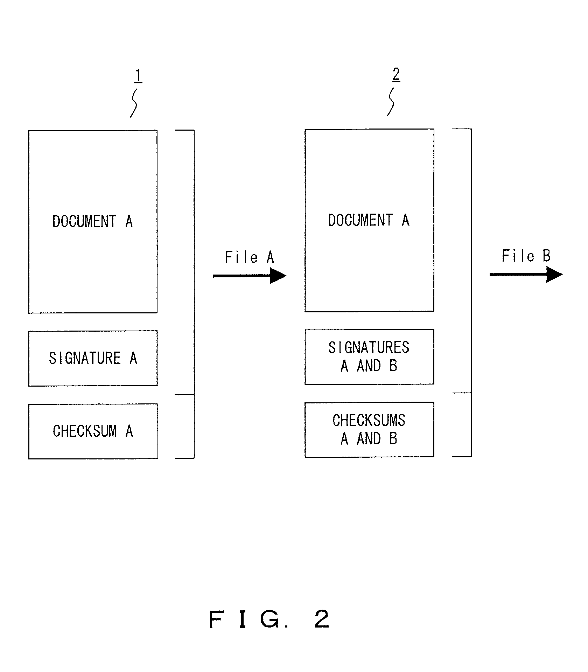

Fig. 2 explains the configuration of a system according to the first preferred embodiment.

In this figure, a document A is, for example, a development plan document, etc., and a signature A is the signature of a creator 1 of the document A. Furthermore, a file A is a file including the document A, the signature A, and a verification result, and transmitted to an approver 2 as one file. The approver 2 verifies the document A included in the file A, additionally puts a signature B if there are no problems, and calculates a checksum. Then, the approver 2 creates a file B which includes also the calculated checksum, and transmits the file B to the next approver.

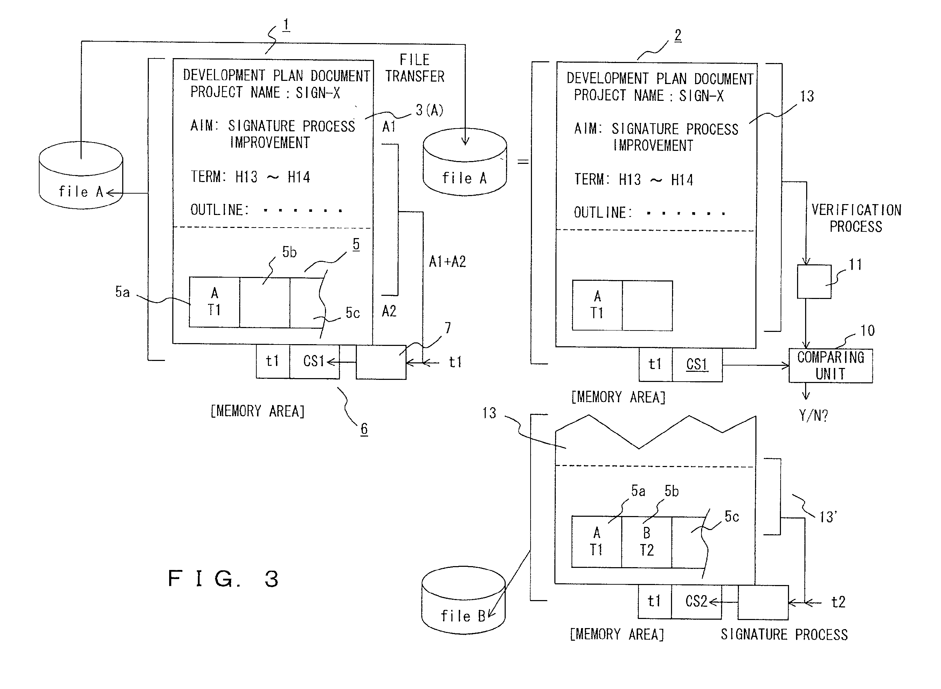

This preferred embodiment has a configuration where the above described approval process is sequentially performed, each approver performs the verification process based on the checksum, and the originality of the document A is guaranteed while visually displaying an approval of a document that is not falsified. A specific explanation is provided below with reference to the system configuration shown in Fig. 3.

A development plan document 3 shown in Fig. 3 is the above described document A shown in Fig. 2, and created by the document creator 1. In this development plan document 3, for example, a project name, an aim, a term, and an outline are described. Namely, "SIGN-X", "signature process improvement", and "the years 2001 to 2002" are respectively described as the project name, the aim, and the term.

Additionally, a seal portion 5 is an area where the above described signatures A and B are recorded, and configured by a creator column 5a and approval columns 5b, 5c, .... The creator column 5a is a signature column of the creator of the development plan document 3, whereas the approval columns 5b, 5c, ... are signature columns of an approver 2 to be described later.

Furthermore, a checksum (CS1) shown in Fig. 3 is the above described checksum A, which is computed from the document A, the visual signature A, and time data (t1) . Accordingly, the document A, the visual signature A, the time data (t1), and the checksum (CS1) are recorded to the file A. Note that the time data (t1) is transmitted from a clock not shown. Additionally, this time data (t1) is not provided from an OS (Operating System) or an application of a computer, but provided externally, for example, with an IC card, etc. possessed by a creator from the viewpoint of preventing falsification.

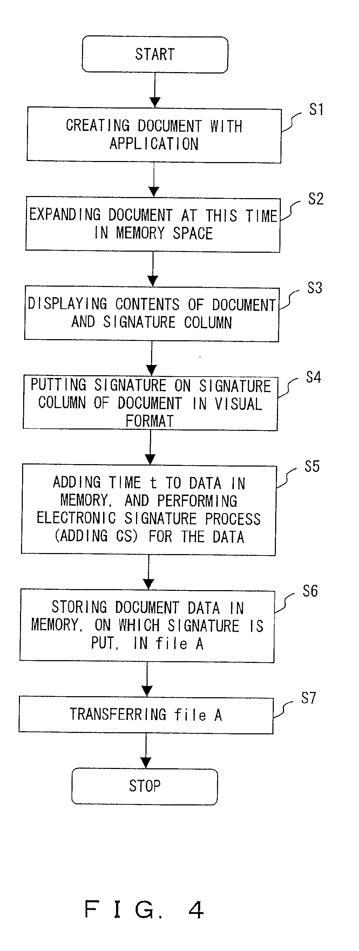

Fig. 4 is a flowchart specifically explaining a process performed by the creator 1 of the above described document.

Firstly, the creator 1 of the document creates the development plan document 3 (document A) with an application (step (hereinafter abbreviated to S) 1). The application is, for example, various types of applications such as a document creation application, a spreadsheet creation application, etc.

Next, the document A created with the above described process, namely, the development plan document 3 is expanded in memory space (S2). The development plan document 3 is expanded, for example, as document data including character code and a control command. Here, the character code is code describing the above described project name, aim, term, and outline. In the meantime, the control command is control code for generating the above described creator column 5a, approval columns 5b, 5c, ....

Next, the information expanded in the RAM is displayed on a display unit (S3). With this process, the creator column 5a and the approval columns 5b, 5c, ... are visually displayed on the display unit along with the development plan document 3 shown in Fig. 3.

Then, the creator 1 verifies the above described display, and puts a signature on the creator column 5a if there are no problems in the contents, etc. described in the development plan document 3. With this process, the creator directly writes his or her name and belonging department name to the visual data, or a seal creation program not shown is invoked, and the seal print of the signature A of the creator 1 is generated and displayed in the creator column 5a (S4). With this process, the creator 1 can verify the visual name and belonging department name, or a seal print, which are displayed in the creator column 5a.

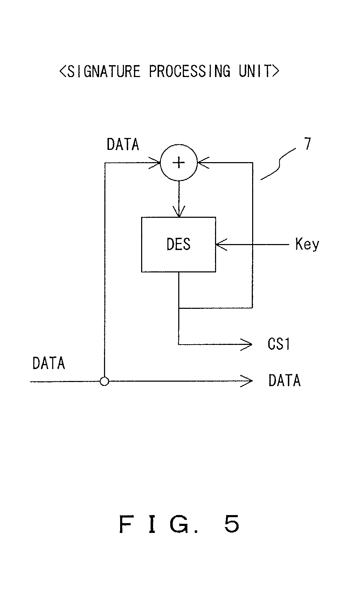

Next, the time data (t1) is read out, and an electronic signature process is performed (S5). This electronic signature process is performed by a signature creating unit 7. The signature creating unit 7 adds the information (data A2 shown in Fig. 3) of the seal portion 5 to the information (data A1) of the development plan document 3, and performs a signature process for the data (DATA) to which the above described time data (t1) is added. Fig. 5 shows this process, with which the data (DATA) is transmitted to the signature creating unit 7, and encrypted according to a DES (Data Encryption Standard) algorithm via a computing unit, and a checksum (CS1) is obtained.

The checksum (CS1) and the time data (t1) are recorded in a predetermined area of the memory. In the creator column 5a, only the name and the belonging department, which are directly written by the creator himself, or the seal print is recorded. The checksum (CS1) and the time data (t1) are recorded in the memory.

Next, the checksum (CS1) generated with the above described process is stored in the file A along with the data of the development plan document 3, the signature data of the creator column 5a, and the time data (t1) in the memory (S6). Specifically, the data of the development plan document 3, the signature data, the time data (t1), and the data of the checksum (CS1), which are recorded in the RAM, are read out, and written to the file A.

The file A thus created is transmitted to the approver 2 according to an instruction of the creator 1 (S7). The creator 1 and the approver 2 are connected by a network such as a LAN, the Internet, etc., and the file A is transmitted/received according to a corresponding protocol.

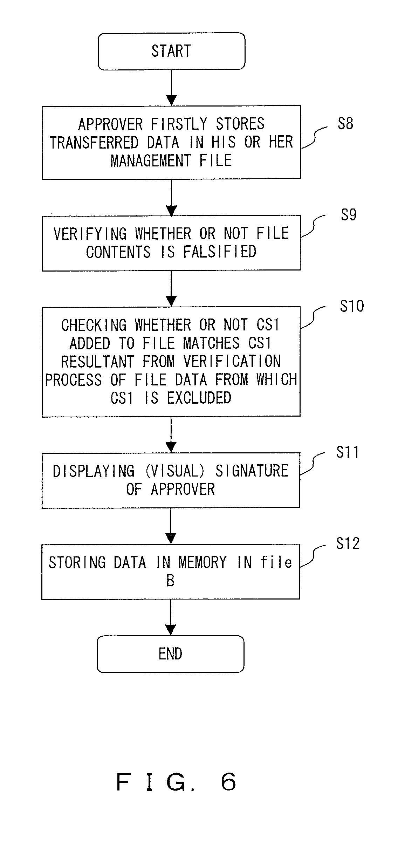

Fig. 6 is a flowchart explaining the process performed by the approver 2.

Firstly, the approver 2 stores the file A transmitted from the creator 1 in his or her management file (S8). This file storage is made, for example, in the memory of the approver 2.

13 shown in Fig. 3 indicates the contents of data stored in the memory. This data includes the information of the development plan document 3, the signature of the creator column 5a, the time data (t1), and the checksum (CS1).

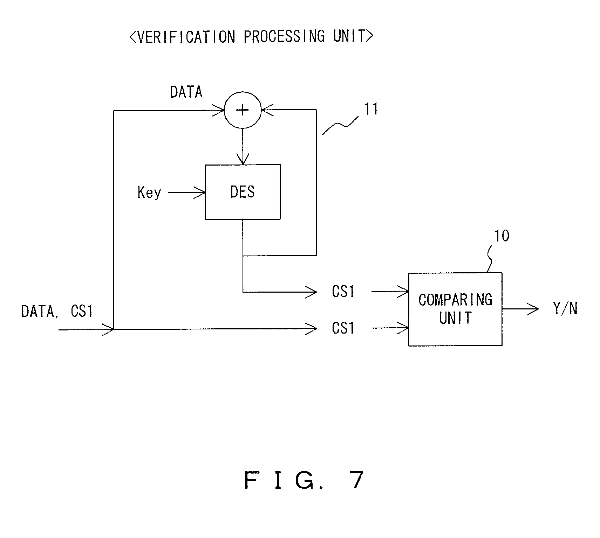

The approver 2 verifies whether or not the contents of the file A is falsified (S9). This verification process is performed by a verification processing unit 11, and a comparing unit 10. Fig. 7 shows the verification process, with which the data (DATA) stored in the memory is read out, and the checksum (CS1) is obtained according to a DES algorithm via the computing unit. Then, the presence/absence of falsification is verified by making a comparison between the obtained checksum (CS1) and the checksum (CS1) recorded in the file A (S10). This comparison process is performed by the comparing unit 10 shown in Fig. 3.

With this process, it can be verified that both the development plan document 3 and the signature of the creator 1 are not falsified, if both of the checksums (CS1) match. If both of the checksums (CS1) mismatch as a result of the comparison, it is determined that the development plan document 3 or the signature is falsified. Therefore, by way of example, an error display is made on a display unit, and the determination result is notified to the approver 2. Accordingly, the approver 2 can surely learn the presence/absence of falsification with the above described process, thereby preventing the development plan document 3 or the signature from being falsified. Here, 13' shown in Fig. 3 indicates the development plan document 3 expanded in the memory of the approver 2, and includes also the data of the creator column 5a.

Next, the approver 2 puts his or her visual signature on the approval column 5b. In a similar manner as in the above described case, time data (t2) is read out, and a visual signature B of an approver 2 is put on the data in the memory, and a checksum (CS2) of the data (DATA) to which the time data (t2) is added is obtained also in this case.

Notice that the checksum (CS2) and the time data (t2) are recorded in a predetermined area of the memory. Additionally, a visual seal print is displayed in the approval column 5b (S11).

Next, the checksum (CS2) generated with the above described process is stored in the file B along with the signature data of the approval column 5b and the time data (t2) (S12).

The file B thus created is transmitted to a higher approver if the approver exists, and the same approval process is performed.

As described above, according to this preferred embodiment, the development plan document 3 created by the document creator and the signature of the creator 1 are securely verified with the verification process of the approver 2, whereby the development plan document 3 or the signature can be prevented from being falsified.

This preferred embodiment refers to the development plan document 3 as a document to be prevented from being falsified. However, this preferred embodiment is not limited to the development plan document 3, and is widely applicable, for example, to a document exchanged between companies, a document exchanged between organizations, and the like. Accordingly, in this case, a document is created by a document creation mechanism, and the document is approved by an approval mechanism.

### <second preferred embodiment>

Next, the second preferred embodiment according to the present invention is explained.

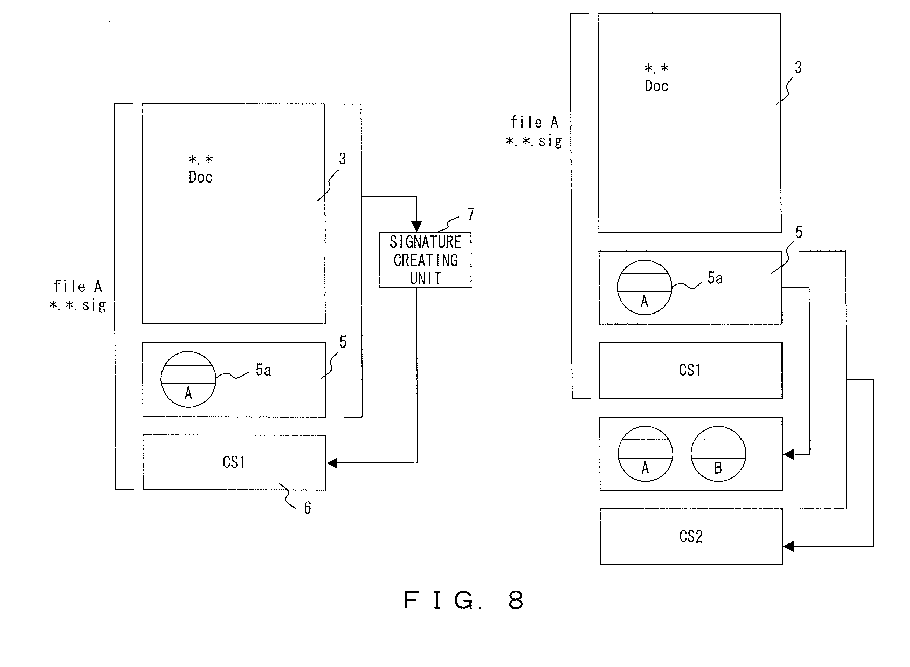

Fig. 8 explains the second preferred embodiment according to the present invention. Similar to the above described preferred embodiment, this preferred embodiment has a configuration where a development plan document 3 is created, a file A is created by putting a signature, and by obtaining a checksum (CS1), and verification is made on the side of an approver 2. However, since the same processes as those of the first preferred embodiment are included in Fig. 8, the configuration is simplified and depicted. A specific explanation is provided below.

In a similar manner as in the above described preferred embodiment, a creator 1 creates a development plan document 3 (document A) with an application, and expands the document in memory. Then, the creator 1 puts a signature on a creator column 5a if there are no problems in the contents described in the development plan document 3, and the seal print of a signature A is generated and displayed on a display unit.

Next, time data (t1) is read out, and an electronic signature is put, and a checksum (CS1) is obtained in a similar manner as in the above described preferred embodiment. Furthermore, the data of the development plan document 3, the signature data, the time data (t1), and the data of the checksum (CS1) are written to a file A, and transmitted to an approver 2.

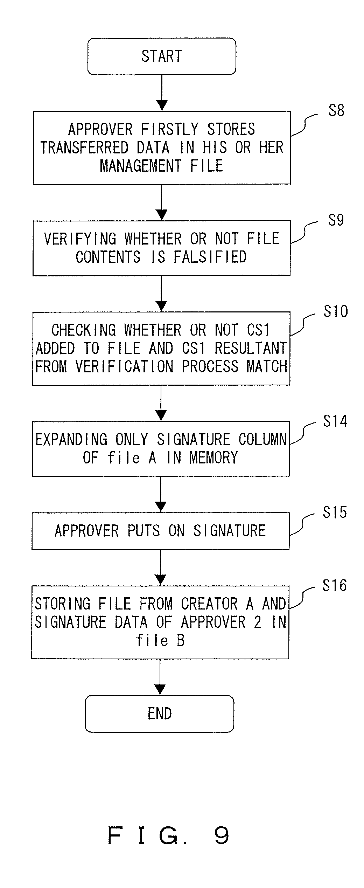

Upon receipt of the file A from the creator 1, the approver 2 performs the process shown in Fig. 9. Firstly, the approver 2 stores the received file A in his or her management file in a similar manner as in the above described preferred embodiment (S8). Then, whether or not the contents of the file A are falsified is verified (S9). Also this verification process is similar to that in the above described preferred embodiment. Namely, a comparison is made between a checksum (CS1) obtained as a result of the verification process, and the checksum (CS1) transmitted from the creator 1. If both of the checksums (CS1) match, it is determined that the development plan document 3 and the signature are not falsified. If both of the checksums (CS1) mismatch, it is determined that the development plan document 3 and/or the signature is falsified (S10).

Accordingly, the approver 2 can surely learn the presence/absence of falsification with the above described process, and falsification between the creator 1 of the document and the approver 2 can be prevented.

If it is determined that the development plan document 3 and the signature are not falsified, only the data (and the checksum (CS1)) of the creator column 5a of the file A is expanded in the memory of the approver 2 (S14). Namely, not the entire data of the file A, but data from which the document data 13 is excluded is expanded in the memory of the approver 2.

Next, the approver 2 puts a signature (S15), and obtains a checksum (CS2). Then, the approver 2 creates a file B by using the file A and the signature data of an approval mechanism, and stores the file B (S16).

Furthermore, if an approval mechanism higher than the approver 2 exists, processes similar to the above described ones are performed. Namely, the file B is verified, the presence/absence of falsification is confirmed, and a signature is put. Such a process is performed, thereby securely preventing the development plan document 3 and the signature from being falsified.

This preferred embodiment also refers to the development plan document 3 as a document example. However, this preferred embodiment is not limited to the development plan document 3, and widely applicable, for example, to a document exchanged between companies, a document exchanged between organizations, and the like.

### <third preferred embodiment>

The third preferred embodiment according to the present invention is described next.

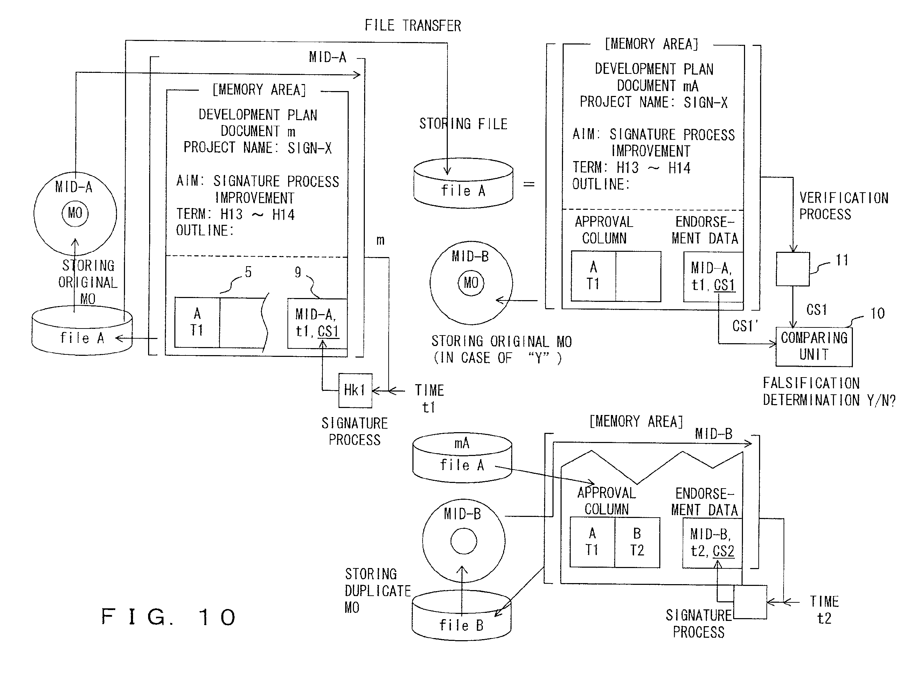

Fig. 10 shows the system configuration for explaining this preferred embodiment. This preferred embodiment has a configuration where a document is stored onto a magneto-optical disk, particularly, a magneto-optical disk on which an area that cannot be falsified is formed. A specific explanation is provided below.

In Fig. 10, a file A is a file including a development plan document 3 (document A), a signature A, and a checksum in a similar manner as in the above described preferred embodiments. In the development plan document 3 (document A), a project name, an aim, a term, and an outline are described.

Additionally, a seal portion 5 is an area on which signatures A and B are put, and configured by a creator column 5a and approval columns 5b, 5c, .... Furthermore, a checksum (CS1), time data (t1), and a medium number (MID-A) of the magneto-optical disk are recorded in an endorsement portion 9. The medium number is a number which is unique to a medium and recorded in an area that cannot be falsified.

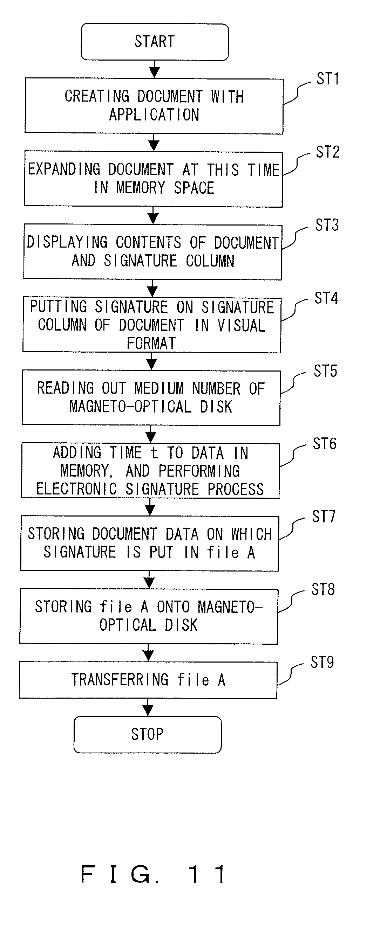

Fig. 11 is a flowchart explaining a document creation process according to this preferred embodiment. Firstly, a creator 1 of a document creates a development plan document 3 (document A) with an application (step (hereinafter abbreviated to ST) 1), and expands the document in memory (ST2). Then, the creator 1 displays the data expanded in the memory on a display unit (ST3). If there are no problems in the contents described in the development plan document 3, the creator 1 puts a signature on a creator column 5a (ST4).

Next, the creator 1 reads out the medium number of a magneto-optical disk (ST5). This read process is performed with a particular password, so that the medium number (MID-A) is read out.

Then, time data (t1) is read out, and an electronic signature is put (ST6). This electronic signature is put by combining the data of the development plan document 3 with the data of the creator column 51, and by encrypting the data (DATA) including the above described medium number "MID-A" in a similar manner as in the above described preferred embodiments (ST6).

Next, the checksum (CS1) obtained with the above described process is recorded in a file A along with the data of the development plan document 3, the signature data of the creator column 5a, the time data (t1), and the medium number (MID-A) (ST7). The data recorded in the file A are then stored onto the magneto-optical disk (ST8).

The file A thus created is transmitted to an approver 2 according to an instruction of the creator 1 (ST9). In a similar manner as in the above described preferred embodiments, the creator 1 and the approver 2 are connected by a network such as a LAN, the Internet, etc., and the file is transmitted according to a corresponding protocol.

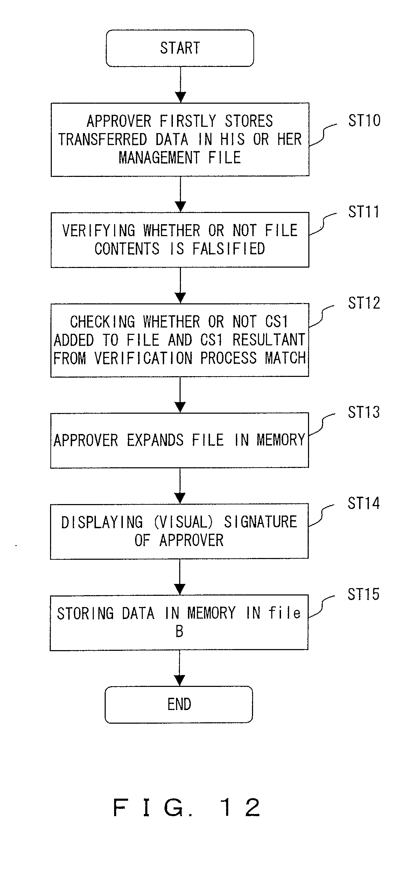

Fig. 12 is a flowchart explaining the process performed by the approver 2.

Firstly, the approver 2 stores the file A transmitted from the creator 1 in his or her management file (ST10), and verifies whether or not the contents of the file A is falsified (ST11). This verification process is performed by a verification processing unit 11 shown in Fig. 10, and it is determined whether or not checksums (CS1) including the above described MID-A match (ST12).

Here, if both of the checksums (CS1) match, it is determined that the development plan document 3, etc. are not falsified, the data of the file A is expanded in the memory of the approver 2 (ST13), and the approver puts his or her signature on the approval column 5b (ST14). In this case, a checksum (CS2) is generated by adding time data (t2) and data A2 of the seal portion 5 to the data A1 of the development plan document 3, and by including the medium number (MID-B) of the magneto-optical disk of the approver 2.

Next, the checksum (CS2) generated with the above described process is stored in a file B along with the data of the development plan document 3, the signature data of the creator column 5a, the time data (t1), the signature data of the approval column 5b, the time data (t2), and the medium number MID-B (ST15).

Additionally, the data of the file B is recorded onto the magneto-optical disk MID-B, which is stored as a duplicate medium.

Furthermore, if an approval mechanism higher than the approver 2 exists, processes similar to the above described ones are performed. Namely, the file B is verified, the presence/absence of falsification is confirmed, and a signature is put. In this way, according to this preferred embodiment, a signature is put on a magneto-optical disk on which an area that cannot be falsified is formed, so that the disk can be used as an original, an attested copy, a duplicate copy, etc., which are not falsified.

The above described preferred embodiment refers to a magneto-optical disk as a storage medium on which an area that cannot be falsified is formed. However, this preferred embodiment is not limited to a magneto-optical disk.

Furthermore, a document is not limited to the development plan document 3 also in this preferred embodiment, which is applicable to various types of documents.

As described above, according to the present invention, not only an original document but also a signature can be prevented from being falsified, thereby securely guaranteeing the originality of a document.

Additionally, an original document is recorded onto a storage medium such as a magneto-optical disk, etc., and the originality of the medium can be secured.

Furthermore, a signature is visually verified, and a transfer process for a document to be approved, etc. can be performed in accordance with a document forwarding procedure.

## Claims

1. An original creating apparatus, comprising:
a combination unit for combining document data and signature data;
a signature unit (7) for adding date and time data to a result of a combination, and for generating a checksum;
a file creating unit (1) for creating a file by adding the date and time data and the checksum to the result of the combination; and
a transmitting unit (1) for transmitting the file to an originality guaranteeing apparatus.

2. An originality guaranteeing apparatus, comprising:
a receiving unit (2) for receiving a file obtained by adding date and time data and a checksum to a result of combining document data and signature data;
a verifying unit (11) for verifying the file, and extracting the checksum from the file;
a comparing unit (10) for making a comparison between the checksum extracted by said verifying unit and the checksum recorded to the file;
a signature unit (12) for performing a signature process for the file if the checksums match as a result of the comparison, and generating a new checksum; and
a file creating (2) unit for creating a new file by combining the new checksum with data of the file.

3. The originality guaranteeing apparatus according to claim 2, wherein
if the checksums mismatch as the result of the comparison, originality of the file is notified to be false.

4. The originality guaranteeing apparatus according to claim 2 or 3, wherein
only the signature data is used to create the new file.

5. The original creating apparatus according to claim 1, wherein
data recorded to the file is also recorded onto a magneto-optical disk.

6. The original creating apparatus according to claim 5, wherein
also information of a number unique to the magneto-optical disk is recorded to the file.

7. The originality guaranteeing apparatus according to any of claims 2, 3 or 4, wherein
data recorded to the new file is also recorded onto a magneto-optical disk.

8. The originality guaranteeing apparatus according to claim 7, wherein
also information of a number unique to the magneto-optical disk is recorded to the new file.

9. An original creating method, comprising:
combining document data and signature data;
adding date and time data to a result of a combination, and generating a checksum;
creating a file by adding the date and time data and the checksum to the result of the combination; and
transmitting the file to an originality guaranteeing apparatus.

10. An originality guaranteeing method, comprising:
receiving a file obtained by adding date and time data and a checksum to a result of combining document data and signature data;
verifying the file, and extracting the checksum from the file;
making a comparison between the extracted checksum and the checksum added to the file;
performing a signature process for the file if the checksums match as a result of the comparison, and generating a new checksum; and
creating a new file by combining the new checksum with data of the file.

11. An originality guaranteeing method, comprising:
combining document data and signature data;
adding date and time data to a result of a combination, and generating a checksum;
creating a file by adding the date and time data and the checksum to the result of the combination;
transmitting the file to an originality guaranteeing apparatus;
receiving the file obtained by adding the date and time data and the checksum to the result of combining the document data and the signature data;
verifying the file, and extracting the checksum from the file;
making a comparison between the extracted checksum and the checksum added to the file;
performing a signature process for the file if the checksums match as a result of the comparison, and generating a new checksum; and
generating a new file by combining the new checksum with data of the file.

12. An original creating program, which is controllable by a controlling device, (for causing a computer to execute a process,) comprising:
combining document data and signature data;
adding date and time data to a result of a combination, and generating a checksum;
creating a file by adding the date and time data and the checksum to the result of the combination; and
transmitting the file to an originality guaranteeing apparatus.

13. A program, which is controllable by a controlling device, (for causing a computer to execute a process,) comprising:
receiving a file obtained by adding date and time data and a checksum to a result of combining document data and signature data;
verifying the file, and extracting the checksum from the file;
making a comparison between the extracted checksum and the checksum recorded to the file;
performing a signature process for the file if the checksums match as a result of the comparison, and generating a new checksum; and
creating a new file by combining the new checksum with data of the file.

14. An originality guaranteeing system, comprising:
a combining unit for combining document data and signature data;
a first signature unit (7) for adding date and time data to a result of a combination, and generating a checksum;
a first file creating unit (1) for creating a file by adding the date and time data and the checksum to the result of the combination;
a transmitting unit (1) for transmitting the file to an originality guaranteeing apparatus;
a verifying unit (11) for extracting the checksum from the transmitted file;
a comparing unit (10) for making a comparison between the checksum extracted by said verifying unit and the checksum added to the file;
a second signature unit (12) for performing a signature process for the file if the checksums match as a result of the comparison, and generating a new checksum; and
a second file creating unit (2) for creating a new file by combining the new checksum with data of the file.
